(19)

Europäisches
Patentamt
European
Patent Office
Office européen
des brevets

(11) **EP 4 746 397 A1**

(12) # EUROPEAN PATENT APPLICATION

(43) Date of publication:
**20.05.2026 Bulletin 2026/21**

(21) Application number: **24306932.5**

(22) Date of filing: **19.11.2024**

(51) International Patent Classification (IPC):
***H04N 1/60*** *(2006.01)*      ***G09G 5/02*** *(2006.01)*

(52) Cooperative Patent Classification (CPC):
**H04N 1/60; G09G 5/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BLONDE, Laurent
  35235 THORIGNE-FOUILLARD (FR)**
• **VIBHOOTHI, Vibhoothi
  DUBLIN D04H2Y9 (IE)**
• **DEMARTY, Claire-Helene
  35520 MONTREUIL LE GAST (FR)**
• **REINHARD, Erik
  35630 HEDE-BAZOUGES (FR)**

(74) Representative: **Vossius & Partner
Patentanwälte Rechtsanwälte mbB
Siebertstraße 3
81675 München (DE)**

(54) **DISTRIBUTED PROCESSING OF COLOR DATA ACROSS MULTIPLE COLOR SPACES**

(57)      Apparatuses and methods are described including techniques for processing color data. Techniques include obtaining input colors of respective pixels derived from an image to be displayed, then, processing the input colors to obtain respective output colors. Where, for at least one of the input colors, the processing includes operations performed in multiple color spaces to reduce computational complexity.

410

OBTAIN INPUT COLORS OF RESPECTIVE PIXELS
DERIVED FROM AN IMAGE

420

PROCESS THE INPUT COLORS TO OBTAIN
RESPECTIVE OUTPUT COLORS, WHEREIN, FOR AT
LEAST ONE OF THE INPUT COLORS, THE
PROCESSING INCLUDES OPERATIONS
PERFORMED IN MULTIPLE COLOR SPACES

**FIG. 4**
**400**

EP 4 746 397 A1

**Description**

BACKGROUND

The increase in display resolution as well as the introduction of high dynamic range (HDR) imaging, have brought about a corresponding increase in energy consumption of display devices. Popular organic light emitting diode (OLED) displays, although relatively efficient, are a leading factor in the energy spent by content consumption in a video chain (including content production, encoding, transmission, decoding, and rendering). One approach to reduce the energy consumption of a display is by manipulating the color data of the rendered images - that is, spatiotemporally modifying the colors of image pixels without affecting the perception of those colors. However, doing so adds more complexity to the rendering of an image that is already computationally demanding in light of the recent increase in image resolution and dynamic range.

SUMMARY

Aspects disclosed in the present disclosure describe methods for processing color data. The methods comprise obtaining input colors of respective pixels derived from an image. Then, processing the input colors to obtain respective output colors, where, for at least one of the input colors, the processing includes operations performed in multiple color spaces to reduce computational complexity.

Aspects disclosed in the present disclosure describe apparatuses for processing color data. The apparatuses comprise at least one processor and memory storing instructions. The instructions, when executed by the at least one processor, cause the apparatuses to obtain input colors of respective pixels derived from an image, and to process the input colors to obtain respective output colors, where, for at least one of the input colors, the processing includes operations performed in multiple color spaces to reduce computational complexity.

Aspects disclosed in the present disclosure describe a non-transitory computer-readable medium comprising instructions executable by at least one processor to perform methods for processing color data. The methods comprise obtaining input colors of respective pixels derived from an image. Then, processing the input colors to obtain respective output colors, where, for at least one of the input colors, the processing includes operations performed in multiple color spaces to reduce computational complexity.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter.

Furthermore, the claimed subject matter is not limited to limitations that solve any or all disadvantages noted in any part of this disclosure.

BRIEF DESCRIPTION OF THE DRAWINGS

FIG. 1 is a block diagram of an example system, according to aspects of the present disclosure.

FIG. 2 is a flowchart illustrating a first method for replacing colors of image pixels, according to aspects of the present disclosure.

FIG. 3 is a flowchart illustrating a second method for replacing colors of image pixels, according to aspects of the present disclosure.

FIG. 4 is a flowchart illustrating a method for color data processing, according to aspects of the present disclosure.

DETAILED DESCRIPTION

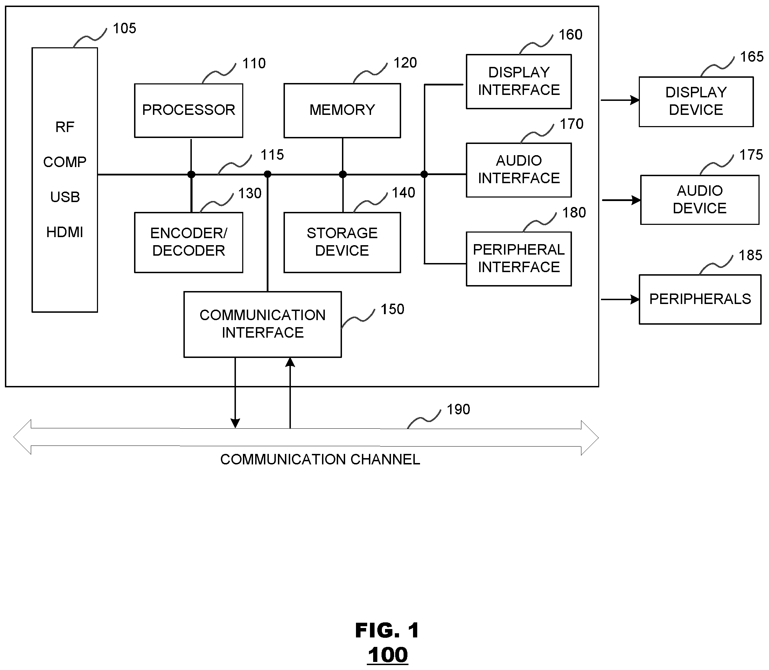

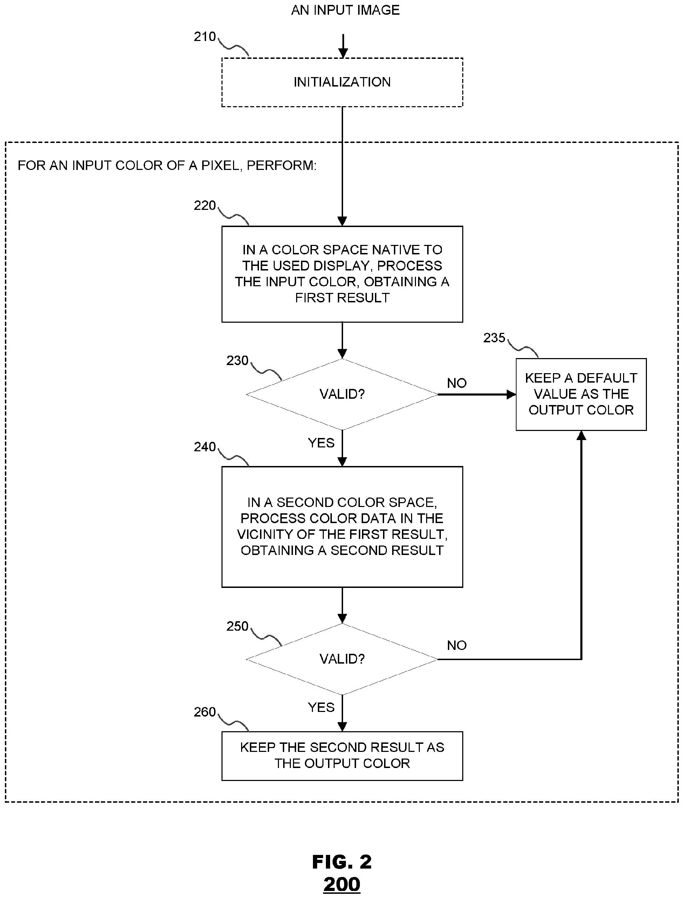

Apparatuses and methods are presented herein for processing color data. A system for processing, delivering, and/or displaying content, with which various aspects and examples described herein may be implemented, is generally described in reference to FIG. 1, followed by a description of the aspects of the present disclosure in reference to FIGS. 2-4.

FIG. 1 illustrates a block diagram of an example system 100. The system 100 may be an electronic device including, for example, a personal computer, laptop computer, mobile phone, tablet computer, multimedia set-top box, digital television receiver, personal video recording system, connected home appliance, vehicle control and/or entertainment system, head-mounted display, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments (or aspects) described herein, including signal (or data) coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU) and/or graphics processing unit (GPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or by the encoder/decoder module 130 may be stored in the storage device 140 and subsequently loaded into memory 120 for execution by the processor 110 and/or by the encoder/decoder module 130. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or of the encoder/decoder module 130 is used to store instructions and/or provide working memory for video encoding and decoding functions. In some embodiments, memory external to the processor 110 and/or to the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

The increase in display resolution (from SD to HD to 4K and soon to 8K and beyond) and the introduction of HDR image rendering have brought about a corresponding increase in energy consumption of display devices. Displaying content is the leading process in the video chain in terms of energy consumption, in both battery-powered devices (e.g., smartphones) and grid-connected devices (e.g., a TV). Recently, OLED displays become popular because of numerous advantages compared to non-emissive displays such as Thin-Film Transistor Liquid Crystal Displays (TFT-LCDs). Rather than using a uniform backlight, OLED displays are composed of LEDs whose emitted lights represent the rendered pixels of the displayed image content. The power consumption of OLED displays is therefore highly correlated with the image content and can be directly estimated by considering the luminance level of the rendered pixels. Although OLED displays consume energy in a more controllable and efficient manner, employing them is still the most energy consuming process in the video chain.

One approach to control the energy consumption of a display is by manipulating the color data of the rendered images. Accordingly, colors of (all or selected) image pixels may be modified, across time and/or across space, without affecting the perception of those colors. The modified colors are perceived as the original colors, but their rendering on the display consumes less energy. For example, to display an image on an OLED display, the image is rendered by generating light pulses that are emitted from respective pixel positions. The energy consumed by the generation of these light pulses can be reduced by modifying the color values of the respective pixels. This is done while maintaining the perceived quality of the rendered image. For example, original colors may be replaced by pairs of colors, either alternating spatially or temporarily, which reproduce the original color stimuli while consuming less energy.

Variants of this approach are implemented by algorithms described, for example, in: "method and device for pixel color replacement in video based on complementary colors" (EP application no. 23306641.4, filed September 29, 2023); "quality constrained method and device for energy reduction control of visual content using alternating complementary colors" (EP application no. 23305865.0, filed June 01, 2023); "method and device for adjustable energy reduction control of visual content using alternating complementary colors" (EP application 23305836., may 26, 2023); "method and device for energy reduction control of visual content" (EP application no. 23305480.8, filed April 03, 2023); "method and device for reducing display energy by using spatially alternating complementary colors" (EP application no. 22306997.2, filed December 22, 2022); "method and device for reducing flicker for successive pixels of temporally alternating complementary colors" (EP application no. 22306994.9, December 22, 2022); and "method and device for reducing display energy by using temporally alternating complementary colors" (EP application no. 22306995.6, filed December 22, 2022).

Hence, to reduce the energy consumed by the rendering of content while not impairing the perceived quality of that content, state-of-the-art algorithms are based on replacing colors of pixels in an image (either a static image or a video image) with other colors. These algorithms leverage the inherent temporal and spatial alternance of colors when replacing a color of a pixel (or colors of two successive pixels) by another color (or pair of colors) to reduce the energy consumed during rendering. However, such modification of colors increases computational complexity. For example, when a 4K video is used, the number of pixels, whose color data are to be processed, may be large.

One approach to reduce the computational complexity may be by using a look-up table (LUT). Thus, colors (or pairs of colors) that have already been determined for the replacement of respective pixel colors are stored in memory and reused later when the same pixel colors occur again in the video content.

Another approach to reduce the computational complexity may be by searching for replacing colors in a nonuniform color space (such as RGB or XYZ), where replacing colors can be found in a relatively short processing time (e.g., see, EP Application No. 22306997.2 or 22306995.6 mentioned above). However, this may be achieved at the expense of the perceived quality of the resulting colors because the computations of color distances are not conducted in a uniform color space. In a uniform color space, the same geometrical distances reflect the same degree of perceived color difference. When the search for the replacing colors is conducted in a uniform color space (such as OkLab color space) the found replacing colors are expected to be perceptually identical to the original ones. But processing in a uniform color space is computationally expensive. Moreover, the required color space conversions (e.g., from RGB to OkLab and back from OkLab to RGB) further increase computational complexity. Thus, in current state-of-the-art algorithms, a tradeoff has to be made between reducing computational complexity and preserving the perceptual quality of the modified video content.

To operate in a uniform color space, transformations from RGB to Lab and Lab to RGB, via XYZ, may be used (e.g., see the Math tab at http://www.brucelind bloom.com). Alternatively, or in addition, OKLab can be used instead of Lab (e.g., see https://bottosson.github.io/posts/oklab). Operations described herein to be performed in a uniform color space, although demonstrated in the Lab color space, are not limited to that color space, but may be applied in other color spaces (such as CIELab, IPT, or OKLab).

Aspects described herein include techniques for lowering computational complexity, and thereby, the time it takes to process color data, while preserving the quality of the color data. According to aspects, this can be achieved by distributing the processing of that color data across multiple color spaces. For example, pixels whose color data processing can be performed in a color space (e.g., in which processing is not expensive) may be limited to that color space if the processed color data are valid; and the number of pixels whose color data processing has to be performed in another color space (e.g., in which processing is expensive) may be limited. For example, the latter color data processing may be applied to refine (or to improve) processed color data provided by the former color data processing. Such refinement (or improvement) may be with respect to energy consumption and/or quality of the processed color data. The validity of color data processed in a color space may be determined based on various criteria depending on the application. For example, the processed color data may not be valid if it does not result in a reduction in energy consumption, if it is not of sufficient visual quality, or if it results in color values outside of the color gamut of the rendering device.

When processing the color data of images, typically, an RGB color space is used. In an RGB color space, the value of each pixel is represented by a red value, a green value, and a blue value (that is, an RGB vector value). To improve processing quality, the pixel colors may be processed in a Lab color space. A Lab color space is a color representation with color uniformity characteristics when compared to standardized human vision. In a Lab color space, arithmetic operations and comparisons between colors result in colors that are more visually accurate compared to human vision than those obtained in an RGB color space. This reduces color and luminance artifacts. However, the process of converting colors from RGB to Lab, computing and comparing the colors in the Lab color space, and then converting back from Lab to RGB requires extensive computing resources and computing time. Additionally, in a Lab color space, performing color comparison is more complex in the vicinity of the gamut boundaries.

To reduce energy consumed by content usage (such as rendering the content on a display), while preserving the quality of the content, according to aspects, two processing stages may be carried out. In a first stage, processing may be performed in a color space (e.g., the RGB color space) to approximate optimal colors for pixels from the video content. In a second stage, processing may be performed in another color space (e.g., a uniform color space) to refine or to improve (some or all of) the colors approximated in the first stage. For example, in the second stage, a search for color values can be done within respective neighborhoods of the color values found in the first stage. Additionally, gamut constraints that were already solved for (e.g., in the first stage) may be used in the second stage for some or all the color values.

An alternating complementary colors (ACC) algorithm is described below as an example of a technique for replacing the colors of pixels of an image (either a static image or a video image) with respective pairs of colors with the goal of reducing the energy consumed by the rendering of the image on a display. Further description of the ACC algorithm can be found in EP Application No. 22306995.6. Notice that a color represented in the RGB color space is denoted herein by $C^{RGB}$ and a corresponding color represented in a uniform color space is denoted herein by $C^{Lab}$ or, for simplicity of the presentation, by C (i.e., $C \equiv C^{Lab}$).

Thus, for a pixel of an image having a color value in an RGB color space, that is, an input (original) color $C_0^{RGB} = R_0 G_0 B_0$, the following steps are carried out to find a replacing pair of colors.

- A uniform color space is selected, having a gamut denoted by G. When a Lab color model is used (as demonstrated herein), a forward color transforms $\mathcal{FT}$ (RGB) can be used to convert an RGB value to a corresponding value in the (CIE)XYZ color space and then to a corresponding value in the Lab color space (i.e., RGB→XYZ→Lab). Alternatively, the conversion may be from the RGB color space directly to the Lab color space (i.e., RGB→ Lab). An inverse color transforms $\mathcal{IT}$ (Lab) can be used to apply inverse operations (i.e., Lab→XYZ→ RGB or Lab→RGB).

- The input color $C_0^{RGB} = R_0 G_0 B_0$ is transformed to a corresponding color $C_0$ in the selected uniform color space. For example,

$$C_0 \equiv C_0^{Lab} = L_0 a_0 b_0 = \mathcal{FT}(R_0 G_0 B_0) .$$

- The uniform color space is sampled within the gamut G to get a series of candidate colors $C = \{C_{i=1:N}\}$, such that a candidate color $C_i = L_i a_i b_i$ satisfies a given criteria. For example: 1) $a_i = b_i = 0$ so that $C_i$ is part of the grey ramp; 2) the cylindrical version $L_i c_i h_i$ has the same luminance and hue as $L_0 a_0 b_0$ but maximum chroma $c_i$; 3) $L_i = L_0$ to avoid any variation in luminance; or 4) $L_i = \alpha \cdot L_0$ with $\alpha \in [0.8, 1.2]$ to limit variation in luminance (quasi-equiluminance).

- For each color sample $C_i$ the following steps are performed:

  - a color $C_j = L_j a_j b_j$ related by symmetry to $C_i = L_i a_i b_i$ is obtained, as follows:

  $$L_j = 2 \cdot L_0 - L_i$$

  $$a_j = 2 \cdot a_0 - a_i$$

  $$b_j = 2 \cdot b_0 - b_i$$

  - It is verified that $C_j$ is within the boundaries of the gamut G. If not, the color sample $C_i$ is excluded from the series of candidate colors.
  - The color pair $C_i$ and $C_j$ are transformed from the uniform color space to the RGB color space:

  $$C_i^{RGB} = R_i G_i B_i = \mathcal{IT}(L_i a_i b_i),$$

  and

  $$C_j^{RGB} = R_j G_j B_j = \mathcal{IT}(L_j a_j b_j).$$

  - The energy (or power) consumed by the pair $C_i^{RGB}$ and $C_j^{RGB}$ if rendered on a display, each for half a frame period, is evaluated as follows:

  $$\mathcal{P}_{ij} = \mathcal{P}_{\frac{1}{2}}(C_i^{RGB}) + \mathcal{P}_{\frac{1}{2}}(C_j^{RGB}).$$

- The pair, $C_i^{RGB}$ and $C_j^{RGB}$, having the minimum consumed energy $\mathcal{P}_{ij}$, is obtained. If that minimum energy is smaller than the energy consumed by the rendering of the input color $C_0^{RGB}$, that is, $\mathcal{P}_{ij} < \mathcal{P}_0(C_0^{RGB})$, then that pair is used to replace the input color $C_0^{RGB}$, otherwise the input color is not replaced.

According to aspects disclosed herein, a color replacement algorithm (such as the ACC algorithm described above) can be applied to color data successively in several (at least two) color spaces such that computations performed in each color space are less intensive, while still preserving the quality of the color data. As demonstrated herein, in a first computational stage, a color space that is native to the display in use (e.g., the RGB color space) can be used to perform preliminary operations, while in a second computational stage, a uniform color space (e.g., a Lab color space) can be used to refine (or to improve) the results of the first stage, to reach the goal of reducing the power consumption while maintaining the image quality for example.

Operating in a nonuniform color space - including converting color data to a uniform color space (e.g., Lab) and back, as well as computations and color comparisons performed in this space - entail significant complexity. Therefore, limiting such operation is of interest. This can be done, for example, by performing computations related to gamut boundary constraints in the RGB color space (as therein the gamut boundary is defined by a cube, i.e., $R \in [0, 255]$, $G \in [0, 255]$, $B \in [0, 255]$ for 8 bits per color component).

According to aspects, an efficient alternating complementary colors (EACC) algorithm can be employed by distributing computations among multiple color spaces. The distributed computation may include an initialization stage (optional), a first stage of computation performed in one color space (e.g., a color space that is native to the display, such as the RGB color space), and a second stage of computation performed in another color space (e.g., a uniform color space, such as the Lab color space), as demonstrated below.

An initialization stage may include the computation of a power volume. The power volume defines the power (or energy) required to render, on a target display, a color value in a color space native to the display - that is, providing a power value for a corresponding color value.

Thus, for example, for a given color $C_0^{RGB}$, a corresponding power value $\mathcal{P}_0$ can be derived from the power volume. Note that computing the power volume during initialization is optional; if the power volume is not available during the following computational stages, then for a given color, the corresponding power value can be computed when needed based on the display model. Other computations may be carried out during the initialization stage. For example, the image pixels may be processed to determine a subset of image pixels on which operations in the following stages will be applied.

A first stage of computation may be carried out in a color space that, for example, is native to the display, such as the RGB color space. The following steps may be carried out for an input (original) color $C_0^{RGB}$:

- A complementary color pair is computed for the input color, $C_0^{RGB}$, using a distance $\Delta$, as follows:

$$C_1^{RGB} = C_0^{RGB} - \Delta,$$

$$C_2^{RGB} = C_0^{RGB} + \Delta.$$

Due to symmetry, notice that the average of the complementary color pair results in the original color:

$$(C_1^{RGB} + C_2^{RGB})/2 = C_0^{RGB} \ .$$

- The *R, G,* or *B* component values of the complementary color pair may be confined to the display gamut (prevented from extending beyond the boundary of the RGB color space). For example, each color component of $C_1^{RGB}$ and $C_2^{RGB}$ can be kept within a range of 5 and 252.

- It is checked whether the power consumed by a rendering of the complementary color pair, $C_1^{RGB}$ and $C_2^{RGB}$, is lower than that of the input color $C_0^{RGB}$, that is:

$$\mathcal{P}(C_1^{RGB}) + \mathcal{P}(C_2^{RGB}) < 2 \cdot \mathcal{P}(C_0^{RGB}).$$

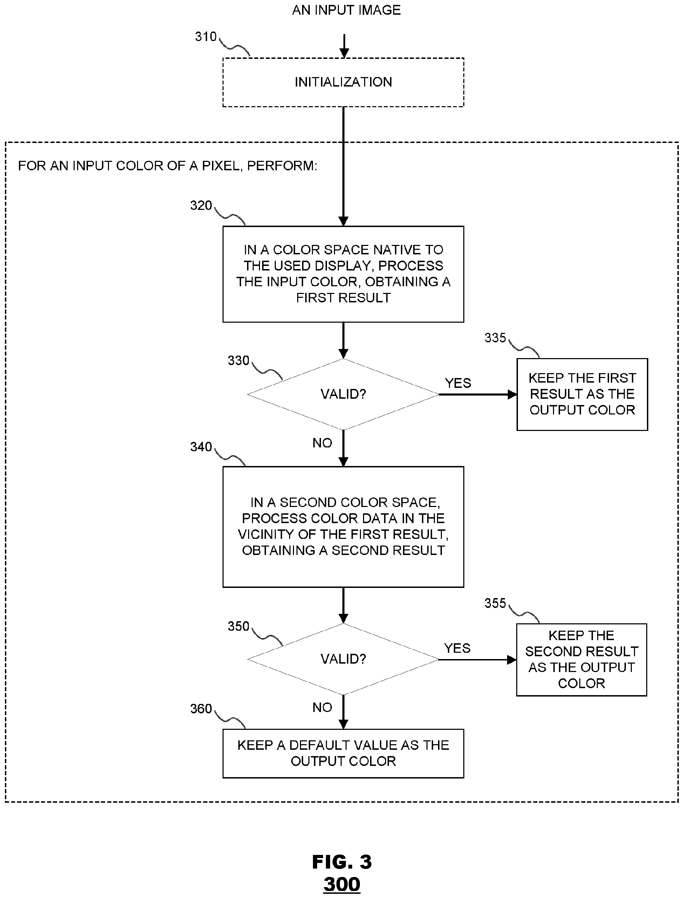

- If the power consumed by a rendering of the complementary color pair is lower than that consumed by a rendering of the input color, the complementary color pair, $C_1^{RGB}$ and $C_2^{RGB}$, may be used to replace the original color $C_0^{RGB}$ (e.g., as further described in reference to FIG. 2 and FIG. 3). If this is not the case, the original color $C_0^{RGB}$ may not be replaced.

A second stage of computation may be carried out in a uniform color space, such as Lab, including the following steps to refine (or to improve) the complementary color pairs, $C_1^{RGB}$ and $C_2^{RGB}$, obtained by the first stage:

- A complementary color pair, denoted $C_1$ and $C_2$, is derived in the uniform color space, as follows:

  - The input color $C_0^{RGB}$ and one of the color pair, for example, $C_1^{RGB}$, are converted into a uniform color space, resulting: $C_0$ and $C_1$.

  - The distance $\Delta_{Lab}$ between $C_0$ and $C_1$ is obtained: $\Delta_{Lab} = C_0 - C_1$.

  - The distance $\Delta_{Lab}$ is added to the input color $C_0$ to obtain $C_2$, that is, $C_2 = C_0 + \Delta_{Lab}$.

- A complementary color pair $C_1'$ and $C_2'$ is found that has a minimal energy level. That optimal pair can be searched for within a small vicinity of $C_1$ and $C_2$ in the uniform color space. For example, when using the Lab color space, the searching space may be defined by variations of the space components L, a, and b (e.g., variations that are less than a maximum value such as 20). In an aspect, using a minimization technique, a power volume (e.g., precomputed during initialization) can be traversed through to find the color pair that corresponds to a minimal power value. In a case where the power volume has not been precomputed, a minimization process can be launched in the used color space to reach the minimal power value.

- The complementary color pair $C_1'$ and $C_2'$ is transformed to *RGB* , obtaining the corresponding pair $C_1^{RGB'}$ and $C_2^{RGB'}$

- If the power consumed by a rendering of the color pair $C_1^{RGB'}$ and $C_2^{RGB'}$ is lower than the power consumed by the rendering of $C_0^{RGB}$, that is:

$$\mathcal{P}\left(C_1^{RGB'}\right) + \mathcal{P}\left(C_2^{RGB'}\right) < 2 \cdot \mathcal{P}(C_0^{RGB}),$$

the color pair $C_1^{RGB'}$ and $C_2^{RGB'}$ may be used to replace $C_0^{RGB}$ (e.g., as further described in reference to FIG. 2 and FIG. 3). If this is not the case, either the original color $C_0^{RGB}$ or the color pair $C_1$ and $C_2$ may be used.

FIG. 2 and FIG. 3, illustrate two methods 200, 300 with which the processing of color data can be distributed into two stages - in a first stage, color data can be processed in one color space, and in a second stage, color data can be processed in a second color space. Distributing the processing in this manner enables directing operations to a color space in which their implementation is less computationally complex. Moreover, it enables limiting the number of operations that are computationally demanding when performed in a certain color space. This can be done while preserving the quality of the processed color data. The distribution of color data processing is demonstrated herein with respect the EACC algorithm described above.

FIG. 2 is a flowchart illustrating a first method 200 for replacing colors of image pixels, according to aspects of the present disclosure. As shown in FIG. 2, the method 200 receives as an input an image. The image may be a static image or a video image to be used (e.g., rendered on a display). Following an (optional) initialization stage 210, steps 220 to 260 can be carried out to process an input color of a pixel from the image. These steps may modify the input color if such a modification leads to a reduction in the rendering power consumption while preserving the quality, as further explained below.

During initialization 210, the method 200 may analyze the image to determine, for example, which regions of the image should be considered for color replacement (by employing steps 220-260). Additionally, any computation of data elements that can be reused during the following stages may be precomputed, such as a power volume, as described above with respect to the initialization stage of the EACC algorithm. Then, for a pixel of the input image that is to be considered for a color replacement, the color of the pixel, namely, the input color, can be processed as follows.

In step 220, in a color space, such as a color space native to the display (that is, the target display used for the rendering of the image), the input color is processed to obtain a first result. As demonstrated with respect to the EACC algorithm, this processing 220 may generate a first result comprising a complementary color pair, $C_1^{RGB}$ and $C_2^{RGB}$, to be considered for replacing the input color $C_0^{RGB}$. The validity of the first result can then be checked, in step 230, according to various criteria. For example, when the first result includes the complementary color pair, it can be checked whether the rendering of this color pair consumes less power than the rendering of the input color (i.e., whether

$$\mathcal{P}(C_1^{RGB}) + \mathcal{P}(C_2^{RGB}) < 2 \cdot \mathcal{P}(C_0^{RGB})$$ ). It can also, or alternatively, be checked whether the quality of this complementary color pair is above a given quality threshold, or inside a color region (e.g., a color space gamut). If the first result is not valid 235, a default value for the output color is kept. The default value may be the input color, $C_0^{RGB}$, so that no replacement of it takes place. Otherwise, processing proceeds to step 240.

In step 240, in another color space, such as a uniform color space, color data in the vicinity of the first result can be processed to obtain a second result. As demonstrated with respect to the EACC algorithm, this processing 240 may generate a second result comprising a complementary color pair $C_1^{RGB'}$ and $C_2^{RGB'}$. The validity of the second result can then be checked, in step 250, according to various criteria. For example, when the second result includes the complementary color pair, it is checked whether the rendering of this color pair consumes less power than the rendering of the input color (i.e., whether $$\mathcal{P}(C_1^{RGB'}) + \mathcal{P}(C_2^{RGB'}) < 2 \cdot \mathcal{P}(C_0^{RGB})$$ ). It can also, or alternatively, be checked whether the quality of this complementary color pair is above a given quality threshold, or inside a color region (e.g., a color space gamut). If the second result is not valid 235, the default value for the output color is kept (e.g., input color, $C_0^{RGB}$, is kept so that no replacement of it takes place). In an alternative, the first result obtained by step 220 is kept, serving as the output color (used to replace the input color $C_0^{RGB}$). Otherwise, if the second result is valid 260, the second result is kept, serving as the output color (used to replace the input color $C_0^{RGB}$).

FIG. 3 is a flowchart illustrating a second method 300 for replacing colors of image pixels, according to aspects of the present disclosure. As shown in FIG. 3, the method 300 receives as an input an image. The image may be a static image or a video image to be used (e.g., rendered on a display). Following an (optional) initialization stage 310, steps 320 to 360 can be carried out to process an input color of a pixel from the image. These steps may modify the input color if such a modification leads to a reduction in the rendering power consumption while preserving the quality, as further explained below.

During initialization 310, the method 300 may analyze the image to determine, for example, which regions of the image should be considered for color replacement (by employing steps 320-360). Additionally, any computation of data elements that can be reused during the following stages may be precomputed, such as a power volume, as described above with respect to the initialization stage of the EACC algorithm. Then, for a pixel of the input image that is to be considered for a color replacement, the color of the pixel, namely, the input color, can be processed as follows.

In step 320, in a color space, such as a color space native to the display (that is, the target display used for the rendering of the image), the input color can be processed to obtain a first result. As demonstrated with respect to the EACC algorithm, this processing 320 may generate a first result comprising a complementary color pair, $C_1^{RGB}$ and $C_2^{RGB}$, to be considered for replacing the input color $C_0^{RGB}$. The validity of the first result can then be checked, in step 330, according to various criteria. For example, when the first result includes the complementary color pair, it can be checked whether the rendering of this color pair consumes less power than the rendering of the input color (i.e., whether $$\mathcal{P}(C_1^{RGB}) + \mathcal{P}(C_2^{RGB}) < 2 \cdot \mathcal{P}(C_0^{RGB})$$ ). It can also, or alternatively, be checked whether the quality of this complementary color pair is above a given quality threshold, or inside a color region (e.g., a color space gamut). If the first result is valid 335, the first result is kept, serving as the output color (used to replace the input color $C_0^{RGB}$). If the first result is not valid, processing may proceed to step 340.

In step 340, in another color space, such as a uniform color space, color data in the vicinity of the first result can be processed to obtain a second result. As demonstrated with respect to the EACC algorithm, this processing 340 may generate a second result comprising a complementary color pair $C_1^{RGB'}$ and $C_2^{RGB'}$. The validity of the second result can then be checked, in step 350, according to various criteria. For example, when the second result includes the complementary color pair, it is checked whether the rendering of this color pair consumes less power than the rendering of the input color (i.e., whether $\mathcal{P}\left(C_1^{RGB'}\right) + \mathcal{P}\left(C_2^{RGB'}\right) < 2 \cdot \mathcal{P}\left(C_0^{RGB}\right)$ ). It can also, or alternatively, be checked whether the quality of this complementary color pair is above a given quality threshold, or inside a color region (e.g., a color space gamut). If the second result is valid 355, the second result is kept, serving as the output color (used to replace the input color $C_0^{RGB}$ ). If the second result is not valid 360, a default value for the output color is kept (e.g., input color, $C_0^{RGB}$, can be kept so that no replacement of it takes place).

Notice that in the two methods 200, 300 described above the number of input colors processed in the uniform color space can be limited, for example, during initialization 210, 310, or via the first validity test 230, 330. In doing so, the computational complexity can be balanced against the quality of the resulting processed color data and/or the energy spent on using (e.g., rendering) these color data.

Additionally, in the two methods 200, 300 described above, the EACC algorithm is used to demonstrate the distribution of processing among multiple stages, where each stage can be applied in a different color space. However, distribution of processing, according to aspects described herein, can be applied to any processing of color data that can be distributed into multiple color spaces with the goal of reducing the overall computational complexity while maintaining the quality of the resulting processed color data.

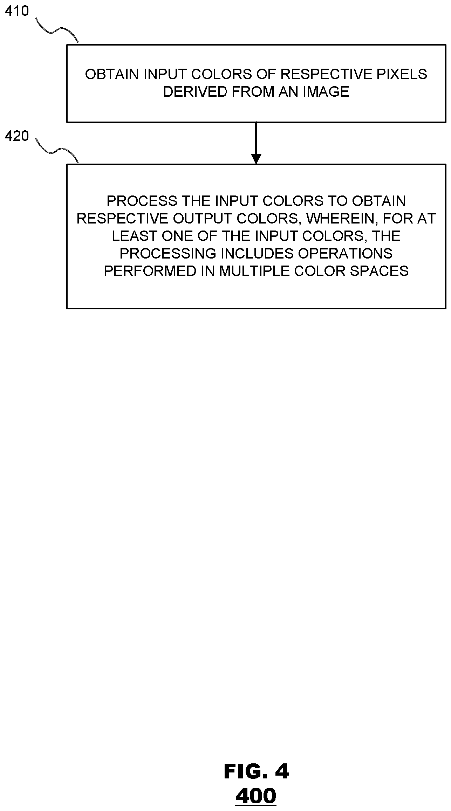

FIG. 4 is a flowchart illustrating a method for color data processing 400, according to aspects of the present disclosure. The method 400, in step 410, may begin with obtaining input colors of respective pixels derived from an image. The image may be a static image or a video image to be rendered on a target display. In an aspect, during an initialization stage, the image may be analyzed to determine a subset of pixels whose colors are to be processed by the method 400. In another aspect, during the initialization stage, a power volume may be computed. The power volume provides, for a given color value, a power value indicating the energy required to render the given color value on the target display. Next, in step 420, the obtained input colors may be processed to obtain respective output colors (e.g., complementary color pairs). For at least one of the input colors, the processing includes operations that are performed in multiple color spaces (e.g., a color space native to a display or a uniform color space). Distributing such operations across multiple color spaces may be carried out to reduce computational complexity. Furthermore, to preserve quality of the color data, distributing such operations across multiple color spaces may be carried out both to reduce computational complexity and to reduce the difference between the input colors and the respective output colors (e.g., as demonstrated herein with respect to FIGS. 2 and 3).

In an aspect, if an output generated by processing in one color space is valid, subsequent processing in another color space can be performed, for example, to refine the generated output. The validity of the generated output may be determined based on whether the rendering of that output requires less energy than that required by the rendering of the input color. The validity of the generated output may also, or alternatively, be determined based on whether the quality of the generated output is preserved (e.g., whether a difference between the generated output color and the input color is below a threshold), or based on whether the generated output is inside a color region (e.g., a color space gamut). For example, for at least one of the input colors processed in step 420 in a first color space (of the multiple color spaces), an input color can be processed to obtain a first result 220. If that first result is not valid, (as a default) an output color can be set to the input color 235, and if that first result is valid, color data in the vicinity of the first result can be processed in a second color space (of the multiple color spaces) to obtain a second result 240. In a case where the second result is obtained, if the second result is not valid, (as a default) the output color can be set to the input color 235 or, alternatively, to the first result; and if the second result is valid, the output color can be set to the second result 260. (See, FIG. 2).

In another aspect, if an output generated by processing in one color space is not valid, subsequent processing in another color space can be performed, for example, to improve the generated output. The validity of the generated output may be determined based on whether the rendering of that output requires less energy than that required by the rendering of the input color. The validity of the generated output may also, or alternatively, be determined based on whether the quality of the generated output is preserved (e.g., whether a difference between the generated output color and the input color is below a threshold), or based on whether the generated output is inside a color region (e.g., a color space gamut). For example, for at least one of the input colors processed in step 420 in a first color space (of the multiple color spaces), an input color can be processed to obtain a first result 320. If that first result is valid, an output color can be set to the first result 335, and if the first result is not valid, color data in the vicinity of the first result can be processed in a second color space (of the multiple color spaces) to obtain a second result 340. In a case where the second result is obtained, if the second result is valid, the output color can be set to the second result 355, and if the second result is not valid, (as a default) the output color can be set to the input color 360. (See, FIG. 3).

One or more embodiments provide a computer program comprising instructions which when executed by one or more processors cause such processors to perform the methods according to any of the embodiments described above. One or more embodiments also provide a computer readable storage medium having stored thereon instructions for performing the methods according to any of the embodiments described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first operation" and a "second operation". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method for processing color data, comprising:

   obtaining input colors of respective pixels derived from an image; and
   processing the input colors to obtain respective output colors, wherein, for at least one of the input colors, the processing includes operations performed in multiple color spaces to reduce computational complexity.

2. An apparatus for processing color data, comprising:

   at least one processor; and
   memory storing instructions that, when executed by the at least one processor, cause the apparatus to:

      obtain input colors of respective pixels derived from an image, and
      process the input colors to obtain respective output colors, wherein, for at least one of the input colors, the processing includes operations performed in multiple color spaces to reduce computational complexity.

3. The method according to claim 1 or the apparatus according to claim 2, wherein the operations are further performed in the multiple color spaces to reduce a difference between the input colors and the respective output colors.

4. The method according to claim 1 or 3, or the apparatus according to claim 2 or 3, wherein, for at least one of the input colors:
   if an output generated by processing in one color space is valid, subsequent processing in another color space is performed.

5. The method according to claim 1 or 3, or the apparatus according to claim 2 or 3, wherein, for at least one of the input colors:
   if an output generated by processing in one color space is not valid, subsequent processing in another color space is performed.

6. The method according to any one of claims 1 or 3-5, or the apparatus according to any one of claims 2-5, wherein, for at least one of the input colors:

> in a first color space, of the multiple color spaces, an input color is processed to obtain a first result, wherein,
> if the first result is not valid, an output color is set to the input color, and
> if the first result is valid, color data in a vicinity of the first result are processed in a second color space, of the multiple color spaces, to obtain a second result.

7. The method according to claim 6 or the apparatus according to claim 6, wherein, when the second result is obtained,

> if the second result is not valid, the output color is set to the input color or to the first result, and
> if the second result is valid, the output color is set to the second result.

8. The method according to any one of claims 1 or 3-5, or the apparatus according to any one of claims 2-5, wherein, for at least one of the input colors:

> in a first color space, of the multiple color spaces, an input color is processed to obtain a first result, wherein,
> if the first result is valid, an output color is set to the first result, and
> if the first result is not valid, color data in a vicinity of the first result are processed in a second color space, of the multiple color spaces, to obtain a second result.

9. The method according to claim 8 or the apparatus according to claim 8, wherein, when the second result is obtained,

> if the second result is valid, the output color is set to the second result, and
> if the second result is not valid, the output color is set to the input color.

10. The method according to any one of claims 1 or 3-9, or the apparatus according to any one of claims 2-9, wherein an output generated by processing in a color space, of the multiple color spaces, comprises a complementary color pair.

11. The method according to any one of claims 1 or 3-10, or the apparatus according to any one of claims 2-10, wherein for an input color of the input colors:
an output color generated by processing in a color space, of the multiple color spaces, is valid if a rendering of the output color requires less energy than that required by a rendering of the input color.

12. The method according to any one of claims 1 or 3-11, or the apparatus according to any one of claims 2-11, wherein for an input color of the input colors:
an output color generated by processing in a color space, of the multiple color spaces, is valid if a difference between the output color and the input color is below a threshold.

13. The method according to any one of claims 1 or 3-12, or the apparatus according to any one of claims 2-12, wherein:
a color space, of the multiple color spaces, is a uniform color space.

14. The method according to any one of claims 1 or 3-13, or the apparatus according to any one of claims 2-13, wherein:
a color space, of the multiple color spaces, is a color space native to a display.

15. The method according to any one of claims 1 or 3-14, or the apparatus according to any one of claims 2-14, wherein the image is a static image or a video image, to be rendered on a display.

**FIG. 1**

**100**

EP 4 746 397 A1

AN INPUT IMAGE

210 ┆ INITIALIZATION ┆

FOR AN INPUT COLOR OF A PIXEL, PERFORM:

220 — IN A COLOR SPACE NATIVE TO THE USED DISPLAY, PROCESS THE INPUT COLOR, OBTAINING A FIRST RESULT

230 — VALID?

NO → 235 — KEEP A DEFAULT VALUE AS THE OUTPUT COLOR

YES

240 — IN A SECOND COLOR SPACE, PROCESS COLOR DATA IN THE VICINITY OF THE FIRST RESULT, OBTAINING A SECOND RESULT

250 — VALID?

NO

YES

260 — KEEP THE SECOND RESULT AS THE OUTPUT COLOR

**FIG. 2**
**200**

AN INPUT IMAGE

310 ┄┄┄┄┄┄┄┄┄┄┄┄┄┄┄
INITIALIZATION

FOR AN INPUT COLOR OF A PIXEL, PERFORM:

320
IN A COLOR SPACE NATIVE TO
THE USED DISPLAY, PROCESS
THE INPUT COLOR, OBTAINING A
FIRST RESULT

330
VALID? ──YES──▶ 335 KEEP THE FIRST
RESULT AS THE
OUTPUT COLOR

NO

340
IN A SECOND COLOR SPACE,
PROCESS COLOR DATA IN THE
VICINITY OF THE FIRST RESULT,
OBTAINING A SECOND RESULT

350
VALID? ──YES──▶ 355 KEEP THE
SECOND RESULT
AS THE OUTPUT
COLOR

NO

360
KEEP A DEFAULT VALUE AS THE
OUTPUT COLOR

**FIG. 3**
**300**

410

OBTAIN INPUT COLORS OF RESPECTIVE PIXELS
DERIVED FROM AN IMAGE

420

PROCESS THE INPUT COLORS TO OBTAIN
RESPECTIVE OUTPUT COLORS, WHEREIN, FOR AT
LEAST ONE OF THE INPUT COLORS, THE
PROCESSING INCLUDES OPERATIONS
PERFORMED IN MULTIPLE COLOR SPACES

**FIG. 4**
**400**

Europäisches
Patentamt
European
Patent Office
Office européen
des brevets

# EUROPEAN SEARCH REPORT

**Application Number**

EP 24 30 6932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/132680 A1 (INTERDIGITAL CE PATENT HOLDINGS SAS [FR]) 27 June 2024 (2024-06-27) * page 11 - page 19; figures 5, 6 * ----- | 1-15 | INV. H04N1/60 G09G5/02 |
| X | US 2018/254020 A1 (BUCKLEY EDWARD [US] ET AL) 6 September 2018 (2018-09-06) | 1-6,8,15 | |
| A | * paragraph [0025] - paragraph [0130] * ----- | 7,9-14 | |

**TECHNICAL FIELDS SEARCHED (IPC)**

H04N
G09G

The present search report has been drawn up for all claims

| Place of search | Date of completion of the search | Examiner |
|---|---|---|
| The Hague | 1 May 2025 | Lauritzen, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

EP 4 746 397 A1

## ANNEX TO THE EUROPEAN SEARCH REPORT
## ON EUROPEAN PATENT APPLICATION NO.

EP 24 30 6932

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2025

| Patent document cited in search report | Publication date | Patent family member(s) | Publication date |
|---|---|---|---|
| WO 2024132680 A1 | 27-06-2024 | NONE | |
| US 2018254020 A1 | 06-09-2018 | AU 2018230927 A1 | 01-08-2019 |
| | | AU 2020227089 A1 | 01-10-2020 |
| | | AU 2022200251 A1 | 10-02-2022 |
| | | CA 3050122 A1 | 13-09-2018 |
| | | CA 3066397 A1 | 13-09-2018 |
| | | CA 3200340 A1 | 13-09-2018 |
| | | CN 110392911 A | 29-10-2019 |
| | | CN 112259034 A | 22-01-2021 |
| | | EP 3593340 A1 | 15-01-2020 |
| | | JP 7083837 B2 | 13-06-2022 |
| | | JP 7299859 B2 | 28-06-2023 |
| | | JP 2020173451 A | 22-10-2020 |
| | | JP 2020514807 A | 21-05-2020 |
| | | JP 2023083401 A | 15-06-2023 |
| | | KR 20190109552 A | 25-09-2019 |
| | | RU 2718167 C1 | 30-03-2020 |
| | | RU 2763851 C1 | 11-01-2022 |
| | | RU 2020111069 A | 12-05-2020 |
| | | TW 201841038 A | 16-11-2018 |
| | | TW 202004315 A | 16-01-2020 |
| | | US 2018254020 A1 | 06-09-2018 |
| | | US 2020020301 A1 | 16-01-2020 |
| | | US 2021358452 A1 | 18-11-2021 |
| | | US 2023104517 A1 | 06-04-2023 |
| | | WO 2018164942 A1 | 13-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23306641
- EP 23305865
- EP 23305836 A
- EP 23305480
- EP 22306997
- EP 22306994
- EP 22306995